# EUROPÄISCHE PATENTANMELDUNG

(11) **EP 4 656 024 A1**
(43) Veröffentlichungstag der Anmeldung: **03.12.2025**
(21) Anmeldenummer: 25167669.8
(22) Anmeldetag: 01.04.2025
(51) Int. Cl.: A01B 69/04

(54) **PLANUNGSSYSTEM**

(30) Priorität: 27.05.2024 DE 102024114797
(71) Anmelder: CLAAS Selbstfahrende Erntemaschinen GmbH, 33428 Harsewinkel (DE)
(72) Erfinder: Verploegen, Thijs, 40625 Düsseldorf (DE); Peters, Stefan, 48147 Münster (DE); Fischer, Josef, 88400 Biberach (DE); Wieckhorst, Jan Carsten, 29525 Uelzen Orsteil Hanstedt 2 (DE); Redenius, Jannik, 32361 Pr. Oldendorf (DE); Hülsmann, Felix, 33615 Bielefeld (DE); Monkenbusch, Robin, 33378 Rheda-Wiedenbrück (DE); Schröder, Axel, 33332 Gütersloh (DE)
(74) Vertreter: CLAAS Gruppe

(57) **Zusammenfassung**

Die vorliegende Erfindung betrifft ein Planungssystem (1), umfassend eine Benutzerschnittstelle (2), eine Kommunikationseinheit (3), eine Recheneinheit (4) und eine Speichereinheit (5), wobei das Planungssystem (1) dazu eingerichtet ist, eine Planung (6) zur Abarbeitung einer landwirtschaftlichen Erntekampagne (18), die zumindest einen Arbeitsprozess (19), der zumindest einen Teilprozess aufweist, umfasst, zu generieren und an zumindest eine für die Durchführung eingerichtete autonome landwirtschaftliche Arbeitsmaschine (7) zur Steuerung, Regelung und/oder Parametrisierung der autonomen Arbeitsmaschine (7) und zumindest eines an der Arbeitsmaschine (7) adaptierten Anbaugerätes (8) zu übertragen, wobei das Planungssystem (1) dazu eingerichtet ist, die zu erstellende Planung (6) und von der zu erstellenden Planung (6) umfasste Einstell- und/oder Effizienzparameter zur Steuerung, Regelung und/oder Parametrisierung der zumindest einen autonomen Arbeitsmaschine (7) und des zumindest einen Anbaugerätes (8) mittels interaktiver natürlichsprachiger Kommunikation über die Benutzerschnittstelle (2) zwischen einem Bediener (16) und dem Planungssystem (1) zu optimieren.

## Beschreibung

Die vorliegende Erfindung betrifft ein Planungssystem gemäß dem Oberbegriff des Anspruches 1.

Aus der DE 10 2022 110 132 A1 ist ein auf Datenaustausch basierendes Assistenzsystem bekannt, welches ein für den Einsatz geeignetes autonomes Fahrzeugs, das als landwirtschaftliche Arbeitsmaschine agiert, konfiguriert und den Einsatz plant sowie dem Fahrzeug die für den Einsatz erforderlichen Daten übermittelt und das Fahrzeug steuert und den Arbeitsbetrieb überwacht. Hierzu wird ein manuell erstellter kundenspezifischer Einsatzplan an das Assistenzsystem übertragen, welcher eine durch das autonome Fahrzeug zu erbringende Dienstleitung nach Art und Umfang beschreibt. Hierfür stellt ein Auftraggeber den kundenspezifischen Einsatzplan bereit. Dabei wird die jeweilige Einsatzzeit vorgegeben, nämlich zumindest der Zeitraum in welchem die Dienstleistung zu erbringen ist. Weiter umfasst der kundenspezifische Einsatzplan den oder die Einsatzorte sowie die Reihenfolge und Art der durchzuführenden Arbeitstätigkeiten.

Die Kommunikation des Auftraggebers mit dem Assistenzsystem erfolgt über eine externe Schnittstelle oder über eine Plattform, mittels der ein kundenspezifischer Einsatzplan konfigurierbar und an das Assistenzsystem übertragbar ist. Der vorgegebene kundenspezifische Einsatzplan basiert auf Eingaben des Auftraggebers. Die aus dem kundenspezifischen Einsatzplan abgeleitete Konfiguration, welches Fahrzeug mit welchen Steuerungsdaten zur Anwendung kommt, obliegt dabei dem Assistenzsystem. Die daraus resultierende, durch das Assistenzsystem erstellte Konfiguration des als landwirtschaftliche Arbeitsmaschine agierenden autonomen Fahrzeugs und die Einsatzplanung sind für den Auftraggeber intransparent. Insbesondere die Einflussnahme auf die Erstellung der Konfiguration ist signifikant beschränkt.

Ausgehend vom vorstehend genannten Stand der Technik liegt der Erfindung die Aufgabe zugrunde, ein Planungssystem bereitzustellen, welches eine vorausplanende Konfiguration autonomer landwirtschaftlicher Arbeitsmaschinen unter Einbeziehung eines Bedieners ermöglicht, wobei der Bediener bei der Erstellung aktiv unterstützt und angeleitet wird.

Diese Aufgabe wird erfindungsgemäß durch ein Planungssystem mit den Merkmalen des Anspruches 1 gelöst. Vorteilhafte Weiterbildungen sind Gegenstand der abhängigen Ansprüche.

Gemäß dem Anspruch 1 wird ein Planungssystem vorgeschlagen, welches eine Benutzerschnittstelle, eine Kommunikationseinheit, eine Recheneinheit und eine Speichereinheit umfasst. Das Planungssystem ist dazu eingerichtet, eine Planung zur Abarbeitung einer landwirtschaftlichen Erntekampagne, die zumindest einen Arbeitsprozess, der zumindest einen Teilprozess aufweist, umfasst, zu generieren und an zumindest eine für die Durchführung eingerichtete autonome landwirtschaftliche Arbeitsmaschine zur Steuerung, Regelung und/oder Parametrisierung der autonomen Arbeitsmaschine und zumindest eines an der Arbeitsmaschine adaptierten Anbaugerätes zu übertragen. Erfindungsgemäß ist vorgesehen, dass die Benutzerschnittstelle dazu eingerichtet ist, die zu erstellende Planung und von der zu erstellenden Planung umfasste Einstell- und/oder Effizienzparameter zur Steuerung, Regelung und/oder Parametrisierung der zumindest einen autonomen Arbeitsmaschine und des zumindest einen Anbaugerätes mittels interaktiver natürlichsprachiger Kommunikation dem Planungssystem vorzugeben und durch das Planungssystem zu optimieren.

Mit dem Planungssystem können alle relevanten Parameter und Einstellungen systemtechnisch von der autonomen Arbeitsmaschine und dem daran adaptierten Anbaugerät unabhängig und vor dem geplanten Einsatz der autonomen Arbeitsmaschine generiert werden. Der Bediener des Planungssystems wird mittels der Benutzerschnittstelle in den Planungsprozess einbezogen. Durch die interaktive natürlichsprachige Kommunikation zwischen dem Bediener und dem Planungssystem wird der Bediener bei der Erstellung der Planung aktiv unterstützt und angeleitet, um die zu erstellende Planung zu optimieren.

Insbesondere kann das Planungssystem dabei auf spezifisches Prozesswissen zugreifen, welches in der zumindest einen Datenbank hinterlegt oder hinterlegbar ist, um eine optimierte Planung und von der zu erstellenden Planung umfasste Einstell- und/oder Effizienzparameter zu generieren. Die generierte Planung kann weiterhin eine durch das Planungssystem optimierte Routenplanung umfassen.

Bevorzugt kann das Planungssystem cloudbasiert oder lokal servergestützt ausgeführt sein.

Die autonome landwirtschaftliche Arbeitsmaschine kann einerseits spezialisiert ausgeführt sein, wie es beispielsweise ein autonomer Mähdrescher oder Feldhäcksler wären, oder andererseits generalisiert. Generalisiert heißt dabei, dass es sich bei der autonomen landwirtschaftlichen Arbeitsmaschine um eine autonome landwirtschaftliche Universal-Arbeitsmaschine handelt, welche sich durch wechselnde Konfigurationen der Anbaugeräte und wechselnde Softwarebausteine zur Ansteuerung der Arbeitsmaschine und/oder der Anbaugeräte auszeichnet, um für eine Vielzahl unterschiedlicher landwirtschaftlicher Arbeitsaufgaben verwendet werden zu können.

Die einzelnen Arbeitsprozesse und/oder die hiervon umfassten Teilprozesse der landwirtschaftlichen Erntekampagne folgen dabei bedarfsweise, beispielsweise abhängig von der Art des Ernteguts, von Umgebungsbedingungen und/oder einer Zielsetzung eines der Erntekampagne zugrundeliegenden Ernteprozesses, aufeinander.

Insbesondere kann die Benutzerschnittstelle dazu eingerichtet sein, eine in der Speichereinheit hinterlegte und/oder hinterlegbare Übersicht landwirtschaftlicher Erntekampagnen, von diesen umfasste Arbeitsprozesse sowie einzelne Teilprozesse der Arbeitsprozesse dem Bediener anzuzeigen und zur individuellen Auswahl zu stellen. Der Bediener kann somit auch eine Erntekampagne, einen Arbeitsprozess oder auch nur einen einzelnen Teilprozess auswählen, um diese durch Nutzung des Planungssystems mittels interaktiver natürlichsprachiger Kommunikation zu planen.

Gemäß einer Weiterbildung kann das Planungssystem dazu eingerichtet sein, in zumindest einer Datenbank hinterlegte Daten zu verwenden, welche im Zeitpunkt der Generierung der Planung verfügbare arbeitsmaschinenspezifische, anbaugerätspezifische und feldspezifische Parameter sowie Umgebungs- und Umweltparameter umfassen.

Weiter bevorzugt kann das Planungssystem dazu eingerichtet sein, in Abhängigkeit von der Auswahl der Erntekampagne und/oder des zumindest einen Arbeitsprozesses und/oder des zumindest einen Teilprozesses automatisch eine Datenbasis geeigneter und verfügbarer autonomer Arbeitsmaschinen und an die Arbeitsmaschinen adaptierbarer Anbaugeräte zu erstellen und die Datenbasis mittels der Benutzerschnittstelle dem Bediener anzuzeigen und zur individuellen Auswahl zu stellen. Die Anzeige und Auswahl Datenbasis mittels der Benutzerschnittstelle basiert ebenfalls auf interaktiver natürlichsprachiger Kommunikation. Insbesondere kann das Planungssystem dazu eingerichtet sein, unter Berücksichtigung einer durch den Bediener getroffenen Auswahl von Arbeitsmaschine und Anbaugerät einen Alternativvorschlag zu generieren, welcher ein besseres Arbeitsergebnis erwarten lässt.

Dabei kann das Planungssystem dazu eingerichtet sein, automatisch zumindest einen Vorschlag für eine Kombination aus wenigstens einer geeigneten und verfügbaren autonomen Arbeitsmaschine und wenigstens einem daran adaptierbaren Anbaugerät zu generieren und mittels der Benutzerschnittstelle dem Bediener anzuzeigen. Neben einer grafischen Visualisierung der zumindest einen Kombination können spezifische Betriebsparameter der zumindest einen Kombination dargestellt werden. Werden mehrere Kombinationen vorgeschlagen, kann der Bediener die spezifischen Betriebsparameter der jeweiligen Kombination als Auswahlkriterium heranziehen.

Bevorzugt kann das Planungssystem dazu eingerichtet sein, auf wenigstens eine Planung eines in der Vergangenheit liegenden Planungsvorganges zuzugreifen und daraus Einstell- und/oder Effizienzparameter abzuleiten und der durchzuführenden Erntekampagne und/oder dem durchzuführenden Arbeitsprozess und/oder zumindest einen Teilprozess als Basisdaten zuzuordnen.

Gemäß einer Weiterbildung kann das Planungssystem dazu eingerichtet sein, automatisch zumindest einen Vorschlag für Einstell- und/oder Effizienzparameter basierend auf von in einem früheren Vergleichszeitraum manuell an derselben Lokation erfassten Daten zu generieren und mittels der Benutzerschnittstelle zur Auswahl zu stellen.

Zusätzlich oder alternativ kann das Planungssystem dazu eingerichtet sein, automatisch einen Vorschlag für Einstell- und/oder Effizienzparameter für den durchzuführenden Arbeitsprozess basierend auf Vergleichsdaten desselben Arbeitsprozesses an zumindest einer anderen Lokation zu generieren und mittels der Benutzerschnittstelle zur Auswahl zu stellen. Dies kann dann vorteilhaft sein, wenn für die betreffende Lokation keine Daten oder Informationen vorliegen, beispielsweise bei einer erstmaligen Bearbeitung eines Feldes für den Einsatz einer anderen Erntegutart.

Dabei kann das Planungssystem dazu eingerichtet sein, die Vergleichsdaten desselben an mehreren anderen Lokationen durchgeführten Arbeitsprozesses auszuwerten und für die jeweiligen Daten Mittelwerte zu bilden und/oder die der Durchführung eines Arbeitsprozesses zugrundeliegenden Vergleichsdaten einer Lokation mit maximalem Ertrag zu bestimmen und die auf Mittelwerten und/oder maximalem Ertrag basierenden Daten zur vorausplanenden Generierung des Einstell- und/oder Effizienzparameter umfassenden Planes zu verwenden. Dadurch kann, beispielsweise bei einer erstmaligen Bearbeitung der Lokation, eine Planungsgrundlage für die zu generierende Planung geschaffen werden.

Die Vergleichsdaten desselben an der zumindest einen anderen Lokation durchgeführten Arbeitsprozesses umfassen dabei unter anderem Art und Typ der eingesetzten autonomen Arbeitsmaschine und des Anbaugerätes, deren Einstellkonfiguration im Zeitpunkt der Durchführung des Arbeitsprozesses, Erntegutart, Bodenbeschaffenheit, Witterungsbedingungen sowie Flächendaten, um eine Vergleichbarkeit zu ermöglichen.

Gemäß einer Weiterbildung kann zur Generierung der optimierten Planung durch das Planungssystem vorgesehen sein, dass das Planungssystem vorhandene Vergleichsdaten mittels künstlicher Intelligenz analysiert. Dazu kann das Planungssystem ein künstliches neuronales Netzwerk verwenden, um die an einer oder mehrerer Lokationen erhobenen Vergleichsdaten für eine spezifische Erntekampagne und/oder einen spezifischen Arbeitsprozess, welche die in der Vergangenheit verwendeten arbeitsmaschinenspezifischen, anbaugerätespezifischen und feldspezifischen Parameter sowie Umgebungs- und Umweltparameter repräsentieren, als Eingangsdatensatz auszuwerten und als Ausgangsdaten die darauf basierende Planung zu bestimmen. Insbesondere kann zur Analyse der Vergleichsdaten ein in der Recheneinheit hinterlegter, auf künstlicher Intelligenz basierender, trainierbarer Analysealgorithmus verwendet werden. Der lernfähige Analysealgorithmus kann beispielsweise auf einem trainierten künstlichen neuronalen Netz, vorzugsweise ein Artificial Neural Network, ein sogenanntes ANN, oder ein Convolutional Neural Network, ein sogenanntes CNN, basieren. Auch andere trainierbare Kl-Architekturen sind gleichermaßen als Basis für den Analysealgorithmus vor stellbar.

Bevorzugt kann die Benutzerschnittstelle zur Eingabe und/oder Auswahl zumindest eines durchzuführenden Arbeitsprozesses sowie einer damit verbundenen Route eingerichtet sein, wobei das Planungssystem dazu eingerichtet ist, unter Verwendung von in der zumindest einer Datenbank hinterlegten topografischen Daten eines Feldes, auf welchem der für die autonome Arbeitsmaschine zu planende Arbeitsprozess durchzuführen ist, und den korrespondierenden feldspezifischen Parametern des Feldes ein digitales Abbild des Feldes zu generieren und von den in der zumindest einen Datenbank hinterlegten arbeitsmaschinenspezifischen und anbaugerätspezifischen Parametern ein digitales Abbild der autonomen landwirtschaftlichen Arbeitsmaschine und des zumindest einen an der Arbeitsmaschine adaptierten Anbaugerätes zu generieren, um mittels eines in der Speichereinheit hinterlegten mathematischen Modells die Durchführung des vorgegebenen Arbeitsprozesse unter Berücksichtigung der vom Bediener vorgegebenen Route zu simulieren, und ein daraus resultierendes Arbeitsergebnis abzuleiten. Das Planungssystem kann hierfür ebenfalls künstliche Intelligenz einsetzen.

Arbeitsmaschinenspezifische und anbaugerätspezifische Parameter der autonomen landwirtschaftlichen Arbeitsmaschine sowie des daran adaptierten Anbaugerätes sind insbesondere Geometriedaten, Betriebszustandsdaten und/oder Ausstattungsdaten.

Feldspezifische Parameter sind unter anderem Bodendaten, einschließlich Daten zur Bodenverdichtung und/oder Daten zur Bodenaufbereitung, Bestandsdaten, einschließlich pflanzenbaulicher Spezifika, wie Daten zur Verunkrautung, Daten zu Krankheiten und Daten zu einem Schädlingsbefall, Ertragsdaten und/oder Flächendaten, einschließlich landwirtschaftlicher Kennzahlen, wie Daten zur Düngung, Daten zur Bewässerung, Daten zu Herbiziden und Daten zu Fungiziden, Geodaten und/oder Wetterdaten, einschließlich langfristigerer Klimadaten.

Weiterhin kann das Planungssystem dazu eingerichtet sein, das Arbeitsergebnis und damit verbundene Ergebnisgrößen der simulierten Durchführung mittels der Benutzerschnittstelle, insbesondere visuell wahrnehmbar, auszugeben, wobei mittels der Benutzerschnittstelle nachträglich manuelle Änderungen von der Simulation zugrundeliegenden Rahmenbedingungen durchführbar sind, wobei das Planungssystem dazu eingerichtet ist, die Simulation basierend auf den nachträglichen Änderungen erneut durchzuführen. Eine visuell wahrnehmbare Ausgabe des durch die Simulation generierten Arbeitsprozesses kann durch in der Datenbank hinterlegte Grafiken und/oder Abbildungen von autonomen Arbeitsmaschinen, daran zu adaptierenden Anbaugeräten und/oder einer strukturierten Ausgabe des Arbeitsergebnisses und der damit verbundenen Ergebnisgrößen erfolgen. Ergebnisgrößen der Simulation sind unter anderem Ressourcenverbrauch, gefahrene Strecke, Arbeitszeit, Arbeitsbeginn und Arbeitsende sowie für das Durchfahren von Vorgewenden erforderliche Parameter. Für das Durchfahren von Vorgewenden erforderliche Parameter umfassen unter anderem einen räumlichen Versatz zu einer georeferenzierten Feldgrenze, eine Anzahl von parallel gestaffelten Vorgewendeabschnitten respektive Vorgewendesequenzen und/oder eine Arbeitsbreite.

Insbesondere kann das Planungssystem dazu eingerichtet sein, im Zeitpunkt der Simulation das Arbeitsergebnis beeinflussende Umgebungs- und Umweltparameter zu berücksichtigen und in Abhängigkeit vom Einflussgrad der Umgebungs- und Umweltparameter auf das Arbeitsergebnis Vorschläge zur Optimierung auszugeben. Das Planungssystem kann durch Datenaustausch mit der zumindest einen Datenbank und/oder einer alternativen Datenressource die Umgebungs- und Umweltparameter empfangen. Insbesondere können als Umweltparameter für den Zeitpunkt der geplanten Durchführung des Arbeitsprozesses prognostizierte Wetterdaten abgerufen werden.

Gemäß einer bevorzugten Weiterbildung kann das Planungssystem dazu eingerichtet sein, die Simulation unter Berücksichtigung von in der Speichereinheit hinterlegten und/oder hinterlegbaren Bearbeitungsstrategien, insbesondere hinsichtlich einer Optimierung der Bearbeitungsleistung, Bearbeitungseffizienz und/oder Bearbeitungsqualität, durchzuführen. Dies ermöglicht es dem Bediener des Planungssystems, unterschiedliche Szenarien der gesamten Erntekampagne und/oder einzelner Arbeitsprozesse durchzuspielen, um in Abhängigkeit vom Ergebnis vom Bediener auswählbar der nachfolgenden Planung zugrunde gelegt zu werden. So können sich die Bearbeitungsstrategien an einer schnellstmöglichen Bearbeitung, der kostengünstigsten Bearbeitung oder einer qualitätsorientieren Bearbeitung orientieren. Die aufgrund der ausgewählten Bearbeitungsstrategie mittels Simulation bestimmten Ergebnisgrößen können Eingangsgrößen einer logistischen Planung als Teilaspekt bilden, die durch das Planungssystem ausgeführt wird.

Bevorzugt kann das Planungssystem zur Abarbeitung eines in der Speichereinheit hinterlegten oder hinterlegbaren taktischen Lösungsweges eingerichtet sein, welcher eine optimierte Routenplanung und Vorgaben für optimierte Einstell- und/oder Effizienzparameter umfasst.

Insbesondere kann das Planungssystem dazu eingerichtet sein, die generierte Planung vor der Durchführung des geplanten Arbeitsprozesses, insbesondere innerhalb eines vorgebbaren zeitlichen Abstands vor der Durchführung, mittels der Benutzerschnittstelle zu visualisieren, wobei das Planungssystem dazu eingerichtet ist, automatisch zu prüfen, ob in der zumindest einen Datenbank eine Aktualisierung der Daten erfolgt ist, welche im Zeitpunkt der Generierung der Planung verwendet wurden, und dies mittels der Benutzerschnittstelle zu visualisieren. Somit kann der Bediener durch das Planungssystem darauf hingewiesen werden, dass Änderungen von verwendeten Daten vorliegen können, die Einfluss auf die generierte Planung haben. Insbesondere kann die generierte Planung vor der Durchführung des geplanten Arbeitsprozesses durch den Bediener des Planungssystems mittels der Benutzerschnittstelle editiert werden. Dies kann erforderlich sein, wenn zwischenzeitlich Ereignisse eingetreten sind, die im Zeitpunkt der Planung durch das Planungssystem nicht bekannt und/oder Daten und Informationen hierzu nicht verfügbar waren. Lediglich beispielhaft hierfür sind Abweichungen von prognostizierten Wetterdaten und/oder eine ungeplante Reparatur der für die Durchführung vorgesehenen autonomen Arbeitsmaschine und/oder des Anbaugerätes zu nennen.

Die vorliegende Erfindung wird nachstehend anhand eines in den Zeichnungen dargestellten Ausführungsbeispieles näher erläutert.

Es zeigen:

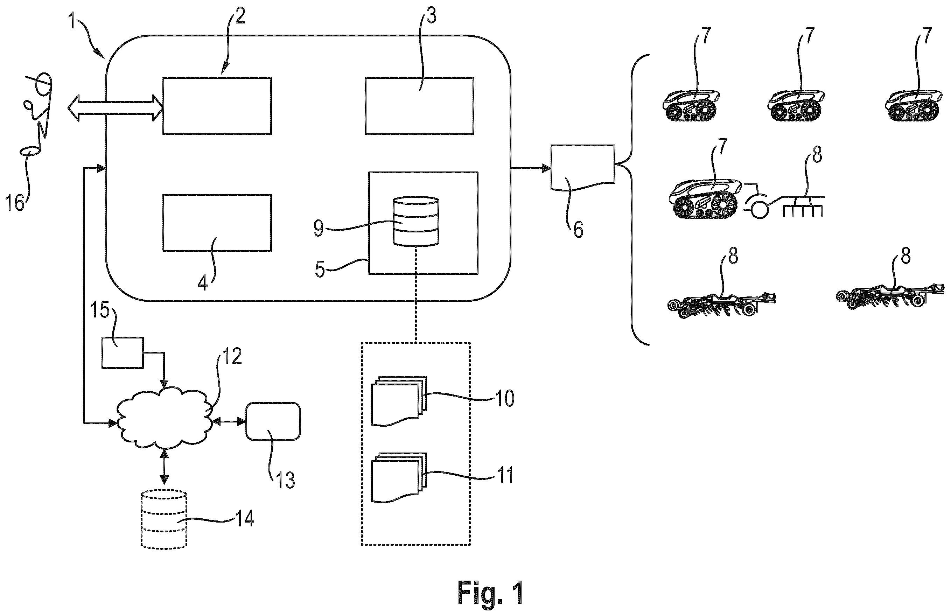

- Fig. 1: schematisch und exemplarisch eine Darstellung eines Planungssystems;
- Fig. 2: schematisch und exemplarisch zwei Ansichten einer Benutzeroberfläche einer Benutzerschnittstelle des Planungssystems;
- Fig. 3: schematisch und exemplarisch eine Ansicht der Benutzeroberfläche nach erfolgter Auswahl einer Erntekampagne oder eines Arbeitsprozesses;
- Fig. 4: schematisch und exemplarisch eine Darstellung der Benutzerschnittstelle des Planungssystems zur Auswahl einer Kombination aus autonomer Arbeitsmaschine und Anbaugerät; und
- Fig. 5: schematisch und exemplarisch eine Darstellung der Benutzerschnittstelle des Planungssystems bei Ausführung einer Überprüfung einer generierten Planung.

Das Planungssystem 1 umfasst eine Benutzerschnittstelle 2, eine Kommunikationseinheit 3, eine Recheneinheit 4 und eine Speichereinheit 5. Das Planungssystem 1 ist dazu eingerichtet, eine Planung 6 zur Abarbeitung einer landwirtschaftlichen Erntekampagne 18, die zumindest einen Arbeitsprozess 19, der zumindest einen Teilprozess aufweist, umfasst, zu generieren. Die Planung 6 wird mittels der Kommunikationseinheit 3 an zumindest eine für die Durchführung eingerichtete autonome landwirtschaftliche Arbeitsmaschine 7 zur Steuerung, Regelung und/oder Parametrisierung der autonomen Arbeitsmaschine 7 und zumindest eines an der Arbeitsmaschine 7 adaptierten Anbaugerätes 8 übertragen.

Das Planungssystem 1 ist dazu eingerichtet, zur vorausplanenden Generierung der Planung 6 für den Betrieb der autonomen Arbeitsmaschine 7 in zumindest einer Datenbank 9 hinterlegte Daten abzurufen und zu verwenden, welche im Zeitpunkt der Generierung der Planung 6 verfügbare arbeitsmaschinenspezifische, anbaugerätespezifische und feldspezifische Parameter 10 sowie Umgebungs- und Umweltparameter 11 sind.

Der Zugriff auf die Benutzerschnittstelle 2 durch einen Bediener 16 kann vorzugsweise webbasierend, insbesondere durch eine mittels Internetbrowser ausführbare Webseite 13, erfolgen, sodass ein berechtigungsabhängiger Zugriff auf das Planungssystem 1 über ein Netzwerk 12 erfolgen kann.

Über das Netzwerk 12 erfolgt der Zugriff des Planungssystems 1 auf zumindest eine externe Datenquelle 14. Bei der externen Datenquelle 14 kann es sich ebenfalls um eine Datenbank handeln und/oder ein Farmmanagementsystem 15, in welchem arbeitsmaschinenspezifische, anbaugerätespezifische und feldspezifische Parameter 10 sowie Umgebungs- und Umweltparameter 11 hinterlegt oder hinterlegbar sind.

So kann das Planungssystem 1 auf der Basis von in der zumindest einen Datenbank 9 und/oder im Farmmanagementsystem 15 hinterlegten Informationen und Daten, die von dem Planungssystem 1 abgerufen werden, eine oder mehrere Erntekampagnen 18 abbilden. Die Informationen und Daten umfassen beispielsweise Angaben zu bearbeitbaren Feldern, zu im landwirtschaftlichen Fuhrpark enthaltenen autonomen Arbeitsmaschinen 7 und daran adaptierbaren Anbaugeräten sowie deren Verfügbarkeit. Die einzelnen Arbeitsprozesse 19 und/oder der hiervon umfassten Teilprozesse einer landwirtschaftlichen Erntekampagne 18 folgen dabei bedarfsweise, beispielsweise abhängig von der Art des Ernteguts, von Umgebungsbedingungen und/oder einer Zielsetzung eines der Erntekampagne 18 zugrundeliegenden Anbau-, Bearbeitungs-, und/oder Ernteprozesses, aufeinander.

Mittels der Benutzerschnittstelle 2 kann der Bediener 16 des Planungssystems 1 eine Erntekampagne 18 und/oder zumindest einen einzelnen Arbeitsprozess 19 aus einer Prozesskette der Erntekampagne 18 auswählen, um diese bzw. diesen zu planen. So kann eine auswählbare Erntekampagne 18 beispielsweise alle das Anbauen bis zum Ernten von Getreide beinhaltenden Arbeitsprozesse 19 als Prozesskette umfassen. Alternativ kann der Bediener 16 einen einzelnen Arbeitsprozess 19, beispielsweise Bodenbearbeitung 20 oder Pflanzenschutzmaßnahme 21, auswählen, um hierfür die Planung 6 zu erstellen.

Das Planungssystem 1 ist dazu eingerichtet, die mittels interaktiver natürlichsprachiger Kommunikation zu erstellende Planung 6 und von der zu erstellenden Planung 6 umfasste Einstell- und/oder Effizienzparameter zur Steuerung, Regelung und/oder Parametrisierung der zumindest einen autonomen Arbeitsmaschine 7 und des zumindest einen Anbaugerätes 8 mittels interaktiver natürlichsprachiger Kommunikation über die Benutzerschnittstelle 2 zwischen dem Bediener 16 und dem Planungssystem 1 zu optimieren.

Das Planungssystem 1 kann dazu eingerichtet sein, auf zumindest einen Planungsvorgang einer in der Vergangenheit liegenden Planung, insbesondere eine Vorjahresplanung, zuzugreifen und darauf basierend dem durchzuführenden Arbeitsprozess die Planung des historischen Planungsvorgangs zuzuordnen, die dem korrespondierenden Arbeitsprozess in der Vergangenheit bereits zugrunde lag oder diesem am nächsten kommt. Die in der Vergangenheit erstellte Planung kann dabei eine Grundlage bilden, die durch das Planungssystem 1 entsprechend der im Zeitpunkt der Generierung der Planung 6 verfügbaren arbeitsmaschinenspezifischen, anbaugerätespezifischen und feldspezifischen Parameter 10 sowie Umgebungs- und Umweltparameter 11 modifiziert wird. Dies gilt für die vom Arbeitsprozess umfassten Teilprozesse entsprechend.

So kann das Planungssystem 1 dazu eingerichtet sein, bei der Generierung der Planung 6 dem durchzuführenden Arbeitsprozess 19 zeitlich vorgelagerte und/oder nachgelagerte Arbeitsprozesse 19 und/oder eine in einem zeitlich vorgelagerten Arbeitsprozess 19 generierte Routenplanung und/oder durch eine landwirtschaftliche Arbeitsmaschine 7 bereits abgefahrene Route zu berücksichtigen. Die in einem zeitlich dem zu planenden Arbeitsprozess 19 vorgelagerten Arbeitsprozess 19 generierte Routenplanung kann durch eine bemannte Arbeitsmaschine und/oder eine autonome Arbeitsmaschine 7 aufgezeichnet worden sein. Dabei können beispielsweise in einem vorgelagerten Arbeitsprozess, beispielsweise der Aussaat, bereits erzeugte bzw. bestehende Fahrgassen verwendet werden, um deren Lage bei dem zu planenden Arbeitsprozess 19 des Pflanzenschutzes durch die ausführende Arbeitsmaschine 7 und das daran adaptierte Anbaugerät 8 zu berücksichtigen. Das voranstehende Beispiel ist exemplarisch zu verstehen; eine analoge Anwendung wäre beispielsweise bei einer Erntekampagne 18 denkbar, welche die Erzeugung von Futtermittel zum Gegenstand hat.

Gemäß einem weiteren Aspekt kann das Planungssystem 1 dazu eingerichtet sein, automatisch einen Vorschlag für die zu generierende Planung 6 für den durchzuführenden Arbeitsprozess 19 basierend auf von in einem in der Vergangenheit liegenden Vergleichszeitraum, vorzugsweise Vorjahreszeitraum, erfassten Daten desselben Arbeitsprozesses 19 an derselben Lokation zu generieren und mittels der Benutzerschnittstelle 2 dem Bediener 16 zur Auswahl zu stellen. Hierdurch wird eine Vereinfachung bei der Erstellung der Planung 6 erreicht. Die Erfassung und/oder Bereitstellung von Vergleichsdaten, die in einem in der Vergangenheit liegenden Vergleichszeitraum angefallen sind, kann durch eine bemannte und/oder autonome Arbeitsmaschine 7 und/oder eine manuelle Eingabe erfolgt sein. Die Vergleichsdaten können dabei sowohl in der zumindest einen Datenbank 9 des Planungssystems 1 als auch in der externen Datenquelle 14, insbesondere dem Farmmanagementsystem 15, abrufbar hinterlegt sein.

Eine weitere Möglichkeit ergibt sich daraus, dass das Planungssystem 1 dazu eingerichtet ist, automatisch einen Vorschlag für die zu generierende Planung 6 für den durchzuführenden Arbeitsprozess 19 basierend auf Vergleichsdaten desselben Arbeitsprozesses 19 an zumindest einer anderen Lokation zu generieren und mittels der Benutzerschnittstelle 2 zur Auswahl zu stellen. Dies ermöglicht es dem Bediener 16, beim Fehlen von Vergleichsdaten für das konkret zu bearbeitende Feld zumindest einen Vorschlag für die zu generierende Planung 6 zu erhalten oder diesen Vorschlag mit den Vergleichsdaten für den in der Vergangenheit liegenden Vergleichszeitraum des betreffenden Feldes zu vergleichen.

Gemäß einem weiteren Aspekt kann das Planungssystem 1 dazu eingerichtet sein, die Vergleichsdaten desselben an mehreren anderen Lokationen durchgeführten Arbeitsprozesses 19 auszuwerten und für die jeweiligen Daten Mittelwerte zu bilden und/oder die der Durchführung eines Arbeitsprozesses 19 zugrundeliegenden Vergleichsdaten einer Lokation mit maximalem Ertrag zu bestimmen und die auf Mittelwerten und/oder maximalem Ertrag basierenden Daten zur vorausplanenden Generierung der Planung 6 zu verwenden.

Eine weitere Möglichkeit zur Generierung der optimierten Planung 6 durch das Planungssystem 6 besteht darin, dass das Planungssystem 1 vorhandene Vergleichsdaten mittels künstlicher Intelligenz analysiert. So kann das Planungssystem 1 ein künstliches neuronales Netzwerk verwenden, um die Vergleichsdaten, welche die in der Vergangenheit verwendeten arbeitsmaschinenspezifischen, anbaugerätespezifischen und feldspezifischen Parameter 10 sowie Umgebungs- und Umweltparameter 11 repräsentieren, als Eingangsdatensatz auszuwerten und als Ausgangsdaten die darauf basierende Planung 6 zu bestimmen.

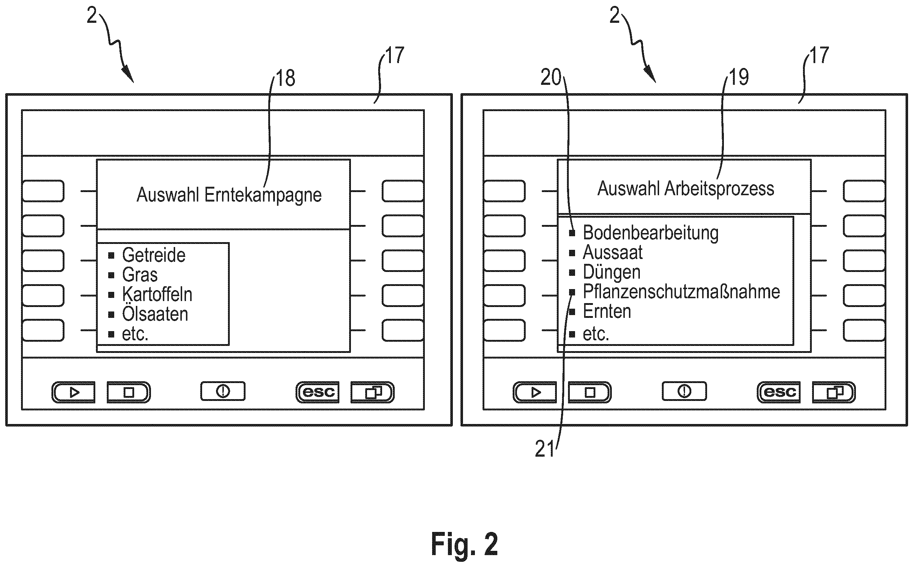

In Fig. 2 sind schematisch und exemplarisch zwei Ansichten einer Benutzeroberfläche 17 der Benutzerschnittstelle 2 des Planungssystems 1 nebeneinander dargestellt. Die Benutzerschnittstelle 2 ist dazu eingerichtet, eine in der Speichereinheit 5 hinterlegte und/oder hinterlegbare Übersicht landwirtschaftlicher Erntekampagnen 18, von diesen umfasste Arbeitsprozesse 19 sowie einzelne Teilprozesse der Arbeitsprozesse 19 dem Bediener 16 anzuzeigen und zur individuellen Auswahl zu stellen.

Die exemplarisch durch die Benutzerschnittstelle 2 visualisierten Ansichten der Benutzeroberfläche 17 in Fig. 2 unterscheiden sich aufgrund einer durch den Bediener 16 vorgenommenen Eingabe, ob die Planung 6 für eine Erntekampagne 18 oder für zumindest einen Arbeitsprozess 19 generiert werden soll.

Die auszuwählende Erntekampagne 18, für welche die Planung 6 generiert werden soll, umfasst beispielsweise den Anbau und die Ernte von Getreide, Gras, Kartoffeln, Ölsaaten und alle hierfür erforderlichen Arbeitsprozesse 19.

Der auszuwählende Arbeitsprozess 19, für welchen die Planung 6 generiert werden soll, umfasst beispielsweise, wie bereits weiter oben ausgeführt, Bodenbearbeitung 20, Pflanzenschutz 21 sowie Aussaat, Düngen, Ernten, Transport. Die vorstehende Aufzählung der Arbeitsprozesse 19 ist nicht abschließend zu verstehen. Die Arbeitsprozesse 19 umfassen jeweils zumindest einen Teilprozess.

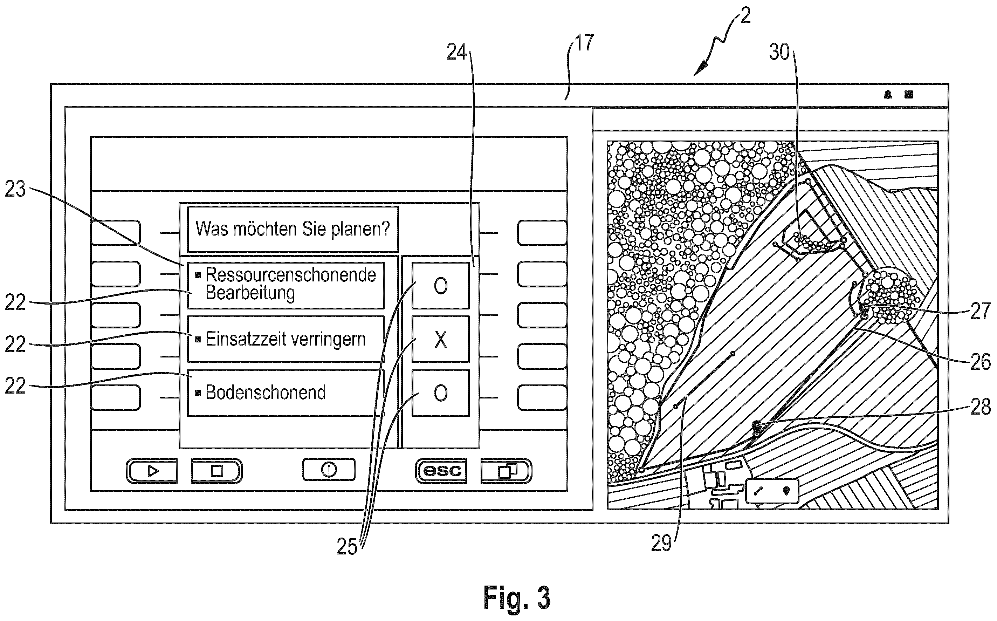

In Fig. 3 ist schematisch und exemplarisch eine Ansicht der Benutzeroberfläche 17 der Benutzerschnittstelle 2 nach erfolgter Auswahl einer Erntekampagne 18 oder eines Arbeitsprozesses 19 dargestellt.

Das Planungssystem 1 ist dazu eingerichtet, eine Simulation unter Berücksichtigung von in der Speichereinheit 5 hinterlegten und/oder hinterlegbaren Bearbeitungsstrategien, insbesondere hinsichtlich einer Optimierung der Bearbeitungsleistung, Bearbeitungseffizienz und/oder Bearbeitungsqualität, durchzuführen.

Hierzu kann, wie in Fig. 3 exemplarisch dargestellt, mittels der grafischen Benutzeroberfläche 17 eine mögliche Auswahl an natürlichsprachigen Strategievorgaben 22 in einem Anzeigesegment 23 der grafischen Benutzeroberfläche 17 dargestellt werden, welche mit den in der Speichereinheit 5 hinterlegten und/oder hinterlegbaren Bearbeitungsstrategien korrespondieren. Jeder dargestellten natürlichsprachigen Strategievorgabe 22 ist in einem Auswahlfenster 24 eine Checkbox 25 zugeordnet, die durch den Bediener 16 gemäß der von ihm getroffenen Auswahl aktiviert wird. Die in Fig. 3 dargestellten Strategievorgaben 22 sind dabei nicht als abschließende Aufzählung zu verstehen.

In Fig. 3 ist weiterhin eine schematische Darstellung von durch das Planungssystem 1 generierten Routendetails für das zu bearbeitende Feld als ein Teil der Planung 6, welche mittels der Benutzerschnittstelle 2 ausgegebenen wird, dargestellt.

Hierzu gibt das Planungssystem 1 beispielsweise für den Arbeitsprozess 19 Bodenbearbeitung 20 als Teil der Planung 6 feldspezifische Parameter aus. Bei den feldspezifischen Parametern kann es sich um die Darstellung einer Feldgrenze 26 eines in vorangehenden Schritt ausgewählten bearbeitenden Feldes, wie anhand von Fig. 2 erläutert, um Angaben eines Startpunkt 27 und eines Endpunkt 28 zur Ableitung zumindest einer Referenzlinie 29 handeln. Weitere Parameter bilden eine durch die Feldgrenze 26 vorgegebene Feldkontur sowie Hindernisse 30 auf dem Feld. Die in Fig. 3 auf die Routenplanung bezogene Darstellung kann auf in der Datenbank 9 hinterlegten Daten zu diesem spezifischen Feld beruhen, welche, wie weiter oben bereits ausgeführt, der Simulation zugrunde liegen können.

Weiterhin werden für die Routenplanung erforderliche Parameter angezeigt, beispielsweise ein einzuhaltender Abstand zur Feldgrenze 26, eine Arbeitsbreite des Anbaugerätes 8, eine Anzahl an Vorgewendesequenzen. Diese Parameter sind durch den Bediener 16 veränderbar.

Die Strategievorgaben 22, hier "Ressourcenschonende Bearbeitung", "Einsatzzeit verringern" oder "Bodenschonend", bilden Eingangsgrößen für eine durch das Planungssystem 1 zu erstellende Logistikplanung. Ein durch das Planungssystem 1 erstellter Logistikplan bildet einen weiteren Teil der Planung 6.

Ein weiterer Aspekt besteht in der Simulation der abzuarbeitenden Erntekampagne 18 oder des durchzuführenden Arbeitsprozesses 19 durch zumindest eine für die Durchführung geeignete autonome landwirtschaftliche Arbeitsmaschine 7 und des zumindest einen an der Arbeitsmaschine 7 adaptierten Anbaugerätes 8. Das Planungssystem 1 ist dazu eingerichtet, unter Verwendung von in der zumindest einen Datenbank 9 hinterlegten topografischen Daten eines Feldes, auf welchem für die autonome Arbeitsmaschine 7 der zu planende Arbeitsprozess 19 oder die zu planenden Arbeitsprozesse 19 durchzuführen ist bzw. sind, und den korrespondierenden feldspezifischen Parametern 10 des Feldes ein digitales Abbild des Feldes zu generieren und von den in der zumindest einen Datenbank 9 hinterlegten arbeitsmaschinenspezifischen und anbaugerätespezifischen Parametern 10 ein digitales Abbild der autonomen landwirtschaftlichen Arbeitsmaschine 7 und des zumindest einen an der Arbeitsmaschine 7 adaptierten Anbaugerätes 8 zu generieren, um mittels eines in der Speichereinheit 5 hinterlegten mathematischen Modells die Durchführung unter Berücksichtigung der Umgebungs- und Umweltparameter 11 zu simulieren und auf Basis der Simulation die Planung 6 zu generieren.

Vorteilhaft ist es, wenn das Planungssystem 1 dazu eingerichtet ist, die durch die Simulation generierte Planung 6 mittels der Benutzerschnittstelle 2, insbesondere visuell wahrnehmbar, auszugeben. Mittels der Benutzerschnittstelle 2 können nachträglich manuelle Änderungen von der Simulation zugrundeliegenden Rahmenbedingungen durch den Bediener 16 durchführbar sein. Das Planungssystem 1 ist des Weiteren dazu eingerichtet, die Simulation basierend auf den nachträglichen Änderungen erneut durchzuführen, um die generierte Planung 6 an nachträglich geänderte Rahmenbedingungen anzupassen. Änderungen von Rahmenbedingungen können, abhängig vom zeitlichen Abstand zwischen der Erstellung der Planung 6 und der vorgesehenen Durchführung des Arbeitsprozesses 19, auf kurzfristig aufgetretene oder weiter zurückliegende Ereignisse zurückgehen. Ein weiter zurückliegendes Ereignis kann beispielsweise eine Trockenperiode oder eine Regenperiode im Frühjahr sein, die im Zeitpunkt der Erstellung der Planung 6 unberücksichtigt geblieben ist. Kurzfristig auftretende Ereignisse können ein Kälteeinbruch oder ein Ausfall von Arbeitsmaschinen 7 und/oder Anbaugeräten 8 sein. Ebenso kann das Auftreten einer Regenphase zwischen zwei bereits geplanten, zeitlich aufeinanderfolgenden Arbeitsprozessen 19 dazu führen, dass die Simulation unter geänderten Rahmenbedingungen erneut durchzuführen ist. Dies kann durch das Planungssystem 1 anlassbezogen automatisch erfolgen. Alternativ kann der Bediener 16 des Planungssystems 1 die erneute Simulation manuell veranlassen.

Das Planungssystem 1 ist dazu eingerichtet, mittels der Simulation generierte Arbeitsabläufe des Arbeitsprozesses 19 und damit verbundene Ergebnisgrößen, insbesondere Ressourcenverbrauch, gefahrene Strecke, Arbeitszeit, Arbeitsbeginn und Arbeitsende, Einsatzdauer der autonomen Arbeitsmaschine und dergleichen, mittels der Benutzerschnittstelle 2 zu visualisieren.

Das Planungssystem 1 ist weiterhin dazu eingerichtet, dass der Bediener 16 eine bestehende Route, die in der zumindest einen Datenbank 9 hinterlegt auswählt und mit der abzuarbeitenden Erntekampagne 18 oder dem durchzuführenden Arbeitsprozess 19 als Basisgrößen für die Simulation durch das Planungssystem 1 verknüpft. Wesentlich ist dabei, dass im Zuge der Simulation durch das Planungssystem 1 dem Bediener 16 bereits während der Erstellung der Planung 6 Optimierungsvorschläge unterbreitet werden.

Mittels der von dem Planungssystem 1 durchgeführten Simulation lassen sich entsprechend der Strategievorgaben 22 jeweils mehrere Vorschläge generieren, die Informationen zu Qualität, Zeitaufwand sowie Kosten-Ressourcenverbrauch umfassen. Diese Vorschläge werden mittels der Benutzerschnittstelle 2 visualisiert.

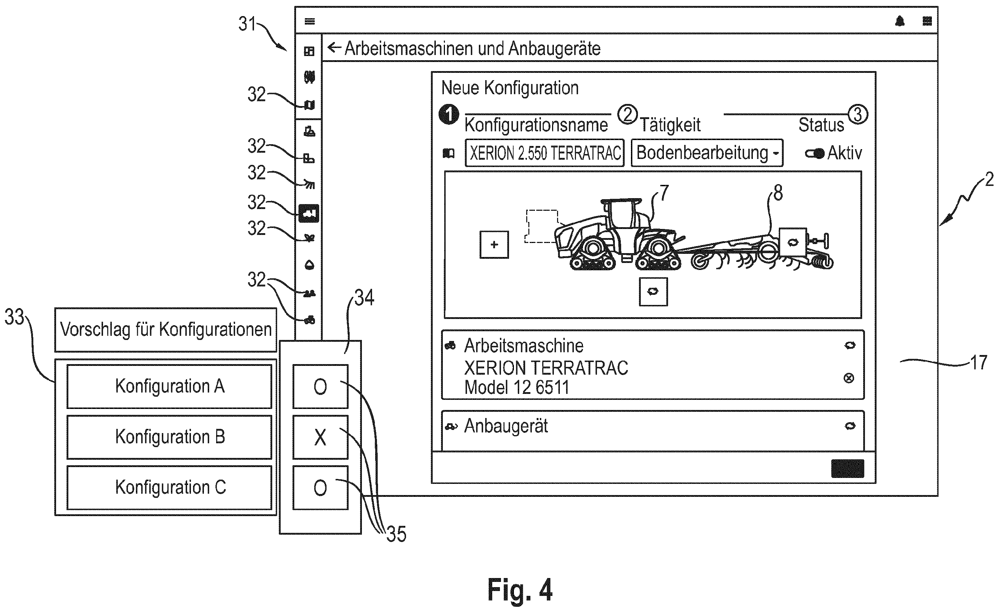

In Fig. 4 ist schematisch eine Darstellung der Benutzerschnittstelle 2 des Planungssystems 1 gezeigt. Mit dem Planungssystem 1 können alle relevanten Parameter und Einstellungen systemtechnisch von der autonomen Arbeitsmaschine 7 und dem daran adaptierten Anbaugerät 8 unabhängig und vor dem geplanten Einsatz der autonomen Arbeitsmaschine 7 respektive der Kombination generiert werden.

In einer Spalte 31 der Benutzeroberfläche 17 sind verschiedene Icons 32 arrangiert, welche unterschiedliche Menüoptionen umfassen. Im dargestellten Ausführungsbeispiel ist das Icon 32 mit der ausgewählten Menüoption "Arbeitsmaschinen und Anbaugeräte" hervorgehoben.

Das Planungssystem 1 generiert auf der Grundlage der Strategievorgabe 22, eines durch den Bediener 16 durch Auswahl vorgegebenen Routenplans, der Art der ausgewählten Erntekampagne 18, des Arbeitsprozesses 19 und/oder des Teilprozesses zumindest eine Konfiguration aus verfügbarer und geeigneter autonomer Arbeitsmaschine 7 und Anbaugerät 8. Dabei werden bevorzugt mehrere Konfigurationen erstellt und dem Bediener 16 zur Auswahl angezeigt. Die Konfigurationen können dabei entsprechend ihrer Geeignetheit absteigend visualisiert werden.

Bevorzugt kann, wie in Fig. 4 exemplarisch dargestellt, mittels der grafischen Benutzeroberfläche 17 eine mögliche Auswahl an auswählbaren Konfigurationen in einem Anzeigesegment 33 der grafischen Benutzeroberfläche 17 dargestellt werden. Jeder dargestellten, im Zeitpunkt der Generierung der Planung 6 möglichen und verfügbaren Konfiguration ist in einem Auswahlfenster 34 eine Checkbox 35 zugeordnet, die durch den Bediener 16 gemäß der getroffenen Auswahl aktiviert wird. Hier wurde beispielhaft die "Konfiguration B" ausgewählt. Dabei kann der Bediener 16 auch dahingehend bei der Auswahl der Konfiguration unterstützt werden, als dass das Planungssystem 1 eine für die durchzuführende Tätigkeit und unter Berücksichtigung der ausgewählten Strategievorgabe 22 für die Bearbeitungsstrategie optimale Konfiguration vorschlägt.

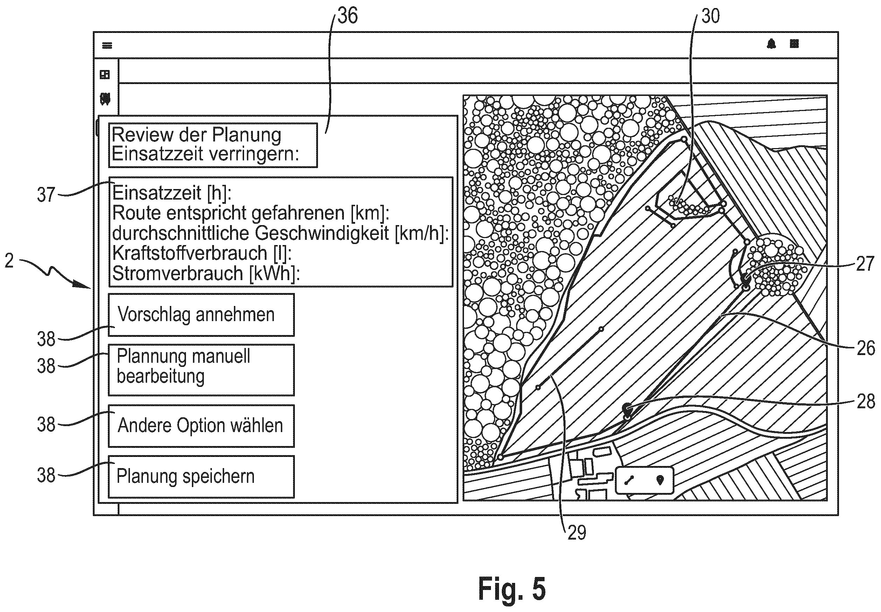

Fig. 5 zeigt schematisch und exemplarisch eine Darstellung der Benutzerschnittstelle 2 des Planungssystems 1 bei Ausführung einer Überprüfung der generierten Planung 6 durch den Bediener 16. Hierzu wird das Feld mittels der grafischen Benutzeroberfläche 17 dargestellt, für welches die Simulation unter Berücksichtigung der im Simulationszeitpunkt gültigen Voraussetzungen durchgeführt wurde.

Für die Beurteilung werden in einem Anzeigesegment 36 in einem Fenster 37 die Ergebnisgrößen "Einsatzzeit", "Fahrstrecke", "durchschnittliche Geschwindigkeit", "Kraftstoffverbrauch" und/oder "Stromverbrauch" für einen ausgewählten oder vorgegebenen Routenplan visualisiert. Dabei sind insbesondere die Ergebnisgrößen Kraftstoffverbrauch" bzw. "Stromverbrauch" abhängig von der Ausführung des Antriebs der Arbeitsmaschine 7 und/oder des Anbaugerätes 8.

In dem Fenster 37 dargestellte Auswahlelemente 38 ermöglichen es dem Bediener 16 zu entscheiden, wie mit der generierten Planung 6 zu verfahren ist. Dazu kann der Bediener 16 durch die Betätigung der Auswahlelemente 38 auswählen, ob dieser den "Vorschlag annehmen", die "Planung manuell bearbeiten", eine "andere Option auswählen" und/oder die "Planung speichern" will. Die Auswahl eine "andere Option auszuwählen" kann die Auswahl einer alternativen Planung 6 beinhalten, welcher eine erneute Simulation durch das Planungssystem 1 zugrunde gelegt wird. Alternativ oder zusätzlich kann die Auswahl eine "andere Option auszuwählen" die Auswahl eines anderen Vorschlags für einen Routenplan umfassen.

Gemäß einem weiteren Aspekt kann das Planungssystem 1 dazu eingerichtet sein, die generierte Planung 6 vor der Durchführung des geplanten Arbeitsprozesses 19, insbesondere innerhalb eines vorgebbaren zeitlichen Abstands vor der Durchführung, mittels der Benutzerschnittstelle 2 zu visualisieren. Dem liegt die Überlegung zugrunde, dass durchgeführte Planungen von Arbeitsprozessen 19 der Erntekampagne 18 und der sich daraus ergebenden Planung 6 zeitlich signifikant auseinanderfallen können. So können zwischen den einzelnen Arbeitsprozessen 19, aber auch zwischen einzelnen Teilprozessen eines Arbeitsprozesses 19, Zeitspannen liegen, die mehrere Tage, Wochen oder Monate umfassen können. Entsprechend bietet die Visualisierung mittels der Benutzerschnittstelle 2 innerhalb eines vorgebbaren zeitlichen Abstands vor der Durchführung des geplanten Arbeitsprozesses 19 und/oder Teilprozesses dem Bediener die Möglichkeit, der generierten Planung 6 zu überprüfen und erforderlichenfalls anzupassen. Dies kann wie in Fig. 5 beispielshaft dargestellt durchgeführt werden.

So kann das Planungssystem 1 dazu eingerichtet sein, automatisch zu prüfen, ob in der zumindest einen Datenbank 9 eine Aktualisierung der Daten erfolgt ist, welche im Zeitpunkt der Generierung der Planung 6 verwendet wurden, und auf eine erfolgte Aktualisierung der Daten mittels der Benutzerschnittstelle 2 durch Visualisierung hinzuweisen. Dies ermöglicht es dem Bediener des Planungssystems 1, eine zeitlich weiter zurückliegende Simulation durch das Planungssystem 1 erneut durchführen zu lassen.

Gemäß einem weiteren Aspekt kann das Planungssystem 1 zur Abarbeitung eines in der Speichereinheit 5 hinterlegten oder hinterlegbaren taktischen Lösungsweges eingerichtet sein, welcher eine optimierte Routenplanung und Vorgaben für optimierte Einstell- und/oder Effizienzparameter umfasst. Der Auswahl und Abarbeitung des taktischen Lösungsweges liegt die Auswahl der zu planenden Erntekampagne 18 und/oder des zumindest einen Arbeitsprozesses 19 zugrunde. Anhand des taktischen Lösungsweges kann die Planung 6 unter Berücksichtigung der verfügbaren arbeitsmaschinenspezifischen, anbaugerätespezifischen und feldspezifischen Parameter 10 sowie Umgebungs- und Umweltparameter 11 durchgeführt werden.

### Bezugszeichenliste

- 1: Planungssystem
- 2: Benutzerschnittstelle
- 3: Kommunikationseinheit
- 4: Recheneinheit
- 5: Speichereinheit
- 6: Planung
- 7: Autonome Arbeitsmaschine
- 8: Anbaugerät
- 9: Datenbank
- 10: Parameter
- 11: Parameter
- 12: Netzwerk
- 13: Webseite
- 14: Datenquelle
- 15: Farmmanagementsystem
- 16: Bediener
- 17: Benutzeroberfläche
- 18: Erntekampagne
- 19: Arbeitsprozess
- 20: Bodenbearbeitung
- 21: Pflanzenschutz
- 22: Strategievorgabe
- 23: Anzeigesegment
- 24: Auswahlfenster
- 25: Checkbox
- 26: Feldgrenze
- 27: Startpunkt
- 28: Endpunkt
- 29: Referenzlinie
- 30: Hindernis
- 31: Spalte
- 32: Icon
- 33: Anzeigesegment

- 34: Auswahlfenster
- 35: Checkbox
- 36: Anzeigesegment
- 37: Fenster
- 38: Auswahlelement

## Patentansprüche

1. Planungssystem (1), umfassend eine Benutzerschnittstelle (2), eine Kommunikationseinheit (3), eine Recheneinheit (4) und eine Speichereinheit (5), wobei das Planungssystem (1) dazu eingerichtet ist, eine Planung (6) zur Abarbeitung einer landwirtschaftlichen Erntekampagne (18), die zumindest einen Arbeitsprozess (19), der zumindest einen Teilprozess aufweist, umfasst, zu generieren und an zumindest eine für die Durchführung eingerichtete autonome landwirtschaftliche Arbeitsmaschine (7) zur Steuerung, Regelung und/oder Parametrisierung der autonomen Arbeitsmaschine (7) und zumindest eines an der Arbeitsmaschine (7) adaptierten Anbaugerätes (8) zu übertragen, **dadurch gekennzeichnet, dass** das Planungssystem (1) dazu eingerichtet ist, die zu erstellende Planung (6) und von der zu erstellenden Planung (6) umfasste Einstell- und/oder Effizienzparameter zur Steuerung, Regelung und/oder Parametrisierung der zumindest einen autonomen Arbeitsmaschine (7) und des zumindest einen Anbaugerätes (8) mittels interaktiver natürlichsprachiger Kommunikation über die Benutzerschnittstelle (2) zwischen einem Bediener (16) und dem Planungssystem (1) zu optimieren.

2. Planungssystem (1) nach Anspruch 1, **dadurch gekennzeichnet, dass** die Benutzerschnittstelle (2) dazu eingerichtet ist, eine in der Speichereinheit (5) hinterlegte und/oder hinterlegbare Übersicht landwirtschaftlicher Erntekampagnen (18), von diesen umfasste Arbeitsprozesse (19) sowie einzelne Teilprozesse der Arbeitsprozesse (19) dem Bediener (16) anzuzeigen und zur individuellen Auswahl zu stellen.

3. Planungssystem (1) nach Anspruch 1 oder 2, **dadurch gekennzeichnet, dass** das Planungssystem (1) dazu eingerichtet ist, in zumindest einer Datenbank (9) hinterlegte Daten zu verwenden, welche im Zeitpunkt der Generierung der Planung (6) verfügbare arbeitsmaschinenspezifische, anbaugerätespezifische und feldspezifische Parameter (10) sowie Umgebungs- und Umweltparameter (11) umfassen.

4. Planungssystem (1) nach einem der vorangehenden Ansprüche, **dadurch gekennzeichnet, dass** das Planungssystem (1) dazu eingerichtet ist, in Abhängigkeit von der Auswahl der Erntekampagne (18) und/oder des zumindest einen Arbeitsprozesses (19) und/oder des zumindest einen Teilprozesses automatisch eine Datenbasis geeigneter und verfügbarer autonomer Arbeitsmaschinen (7) und an die Arbeitsmaschinen (7) adaptierbarer Anbaugeräte (8) zu erstellen und die Datenbasis mittels der Benutzerschnittstelle (2) dem Bediener (16) anzuzeigen und zur individuellen Auswahl zu stellen.

5. Planungssystem (1) nach Anspruch 4, **dadurch gekennzeichnet, dass** das Planungssystem (1) dazu eingerichtet ist, automatisch zumindest einen Vorschlag für eine Kombination aus wenigstens einer geeigneten und verfügbaren autonomen Arbeitsmaschine (7) und wenigstens einem daran adaptierbaren Anbaugerät (8) zu generieren und mittels der Benutzerschnittstelle (2) dem Bediener (16) anzuzeigen.

6. Planungssystem (1) nach einem der vorangehenden Ansprüche, **dadurch gekennzeichnet, dass** das Planungssystem (1) dazu eingerichtet ist, auf wenigstens eine Planung (6) eines in der Vergangenheit liegenden Planungsvorgangs zuzugreifen und daraus Einstell- und/oder Effizienzparameter abzuleiten und der durchzuführenden Erntekampagne (18) und/oder dem durchzuführenden Arbeitsprozess (19) und/oder zumindest einen Teilprozess als Basisdaten zuzuordnen.

7. Planungssystem (1) nach einem der vorangehenden Ansprüche, **dadurch gekennzeichnet, dass** das Planungssystem (1) dazu eingerichtet ist, automatisch zumindest einen Vorschlag für Einstell- und/oder Effizienzparameter basierend auf von in einem früheren Vergleichszeitraum manuell an derselben Lokation erfassten Daten zu generieren und mittels der Benutzerschnittstelle (2) zur Auswahl zu stellen.

8. Planungssystem (1) nach einem der vorangehenden Ansprüche, **dadurch gekennzeichnet, dass** das Planungssystem (1) dazu eingerichtet ist, automatisch einen Vorschlag für Einstell- und/oder Effizienzparameter für den durchzuführenden Arbeitsprozess (19) basierend auf Vergleichsdaten desselben Arbeitsprozesses (19) an zumindest einer anderen Lokation zu generieren und mittels der Benutzerschnittstelle (2) zur Auswahl zu stellen.

9. Planungssystem (1) nach Anspruch 8, **dadurch gekennzeichnet, dass** das Planungssystem (1) dazu eingerichtet ist, die Vergleichsdaten desselben an mehreren anderen Lokationen durchgeführten Arbeitsprozesses (19) auszuwerten und für die jeweiligen Daten Mittelwerte zu bilden und/oder die der Durchführung eines Arbeitsprozesses (19) zugrundeliegenden Vergleichsdaten einer Lokation mit maximalem Ertrag zu bestimmen und die auf Mittelwerten und/oder maximalem Ertrag basierenden Daten zur Generierung der Planung (6) zu verwenden.

10. Planungssystem (1) nach einem der vorangehenden Ansprüche, **dadurch gekennzeichnet, dass** die Benutzerschnittstelle (2) zur Eingabe und/oder Auswahl zumindest eines durchzuführenden Arbeitsprozesses (19) sowie einer damit verbundenen Route eingerichtet ist, wobei das Planungssystem (1) dazu eingerichtet ist, unter Verwendung von in der zumindest einer Datenbank (9) hinterlegten topografischen Daten eines Feldes, auf welchem der für die autonome Arbeitsmaschine (7) zu planende Arbeitsprozess (18) durchzuführen ist, und den korrespondierenden feldspezifischen Parametern des Feldes ein digitales Abbild des Feldes zu generieren und von den in der zumindest einen Datenbank (9) hinterlegten arbeitsmaschinenspezifischen und anbaugerätspezifischen Parametern (10) ein digitales Abbild der autonomen landwirtschaftlichen Arbeitsmaschine (7) und des zumindest einen an der Arbeitsmaschine (7) adaptierten Anbaugerätes (8) zu generieren, um mittels eines in der Speichereinheit (5) hinterlegten mathematischen Modells die Durchführung des Arbeitsprozesses (19) und ein daraus resultierendes Arbeitsergebnis zu simulieren.

11. Planungssystem (1) nach Anspruch 10, **dadurch gekennzeichnet, dass** das Planungssystem (1) dazu eingerichtet ist, das Arbeitsergebnis und damit verbundene Ergebnisgrößen der simulierten Durchführung mittels der Benutzerschnittstelle (2), insbesondere visuell wahrnehmbar, auszugeben und dass mittels der Benutzerschnittstelle (2) nachträglich manuelle Änderungen von der Simulation zugrundeliegenden Rahmenbedingungen durchführbar sind, wobei das Planungssystem (1) dazu eingerichtet ist, die Simulation basierend auf den nachträglichen Änderungen erneut durchzuführen.

12. Planungssystem (1) nach Anspruch 10 oder 11, **dadurch gekennzeichnet, dass** das Planungssystem (1) dazu eingerichtet ist, im Zeitpunkt der Simulation das Arbeitsergebnis beeinflussende Umgebungs- und Umweltparameter (11) zu berücksichtigen und in Abhängigkeit vom Einflussgrad der Umgebungs- und Umweltparameter (11) auf das Arbeitsergebnis Vorschläge zur Optimierung auszugeben.

13. Planungssystem (1) nach einem der Ansprüche 10 bis 12, **dadurch gekennzeichnet, dass** das Planungssystem (1) dazu eingerichtet ist, die Simulation unter Berücksichtigung von in der Speichereinheit (5) hinterlegten und/oder hinterlegbaren Bearbeitungsstrategien, insbesondere hinsichtlich einer Optimierung der Bearbeitungsleistung, Bearbeitungseffizienz und/oder Bearbeitungsqualität, durchzuführen.

14. Planungssystem (1) nach einem der vorangehenden Ansprüche, **dadurch gekennzeichnet, dass** das Planungssystem (1) zur Abarbeitung eines in der Speichereinheit (5) hinterlegten oder hinterlegbaren taktischen Lösungsweges eingerichtet ist, welcher eine optimierte Routenplanung und Vorgaben für optimierte Einstell- und/oder Effizienzparameter umfasst.

15. Planungssystem (1) nach einem der vorangehenden Ansprüche, **dadurch gekennzeichnet, dass** das Planungssystem (1) dazu eingerichtet ist, die generierte Planung (6) vor der Durchführung des geplanten Arbeitsprozesses (19), insbesondere innerhalb eines vorgebbaren zeitlichen Abstands vor der Durchführung, mittels der Benutzerschnittstelle (2) zu visualisieren, wobei das Planungssystem (1) dazu eingerichtet ist, automatisch zu prüfen, ob in der zumindest einen Datenbank (9) eine Aktualisierung der Daten erfolgt ist, welche im Zeitpunkt der Generierung der Planung (6) verwendet wurden, und dies mittels der Benutzerschnittstelle (2) zu visualisieren.
